# EUROPEAN PATENT SPECIFICATION

(11) **EP 0 489 457 B1**
(45) Date of publication and mention of the grant of the patent: **01.05.1996**
(21) Application number: 91203085.5
(22) Date of filing: 26.11.1991
(51) Int. Cl.: H04N 9/12, H01J 31/12

(54) **Flat-panel picture display device**
Bildwiedergabeanordnung vom dünnen Typ
Dispositif de reproduction d'image du type mince

(30) Priority: 03.12.1990 NL 9002643
(43) Date of publication of application: 10.06.1992
(73) Proprietor: Philips Electronics N.V., NL-5621 BA Eindhoven (NL)
(72) Inventor: van Gorkom, Gerardus Gegorius Petrus, NL-5656 AA Eindhoven (NL); Trompenaars, Petrus Hubertus Franciscus, NL-5656 AA Eindhoven (NL); de Zwart, Siebe Tjerk, NL-5656 AA Eindhoven (NL); Lambert, Nicolaas, NL-5656 AA Eindhoven (NL)
(74) Representative: Koppen, Jan

(56) References cited:
- EP-A- 0 271 926
- EP-A- 0 400 750
- US-A- 3 624 273

## Description

The invention relates to a colour picture display device having a vacuum envelope with a front wall and a luminescent screen and with a rear wall, and particularly relates to a flat-panel picture display device (*i.e.* a picture display device having a small "front-to-back dimension") which is clearly distinguished from state-of-the-art display devices.

Many research efforts in the field of picture display devices of the flat-panel type relate to devices having a transparent face plate and a rear plate which are interconnected by means of side walls and in which the inner side of the face plate is provided with a phosphor pattern, one side of which is provided with an electrically conducting coating (the combination generally being referred to as luminescent screen). A large number of electron-beam producing means is generally arranged on the rear plate and a large number of deflection means is provided to cause each produced electron beam to scan a part of the luminescent screen. If (video information-controlled) electron beams impinge upon the luminescent screen, a visual image is formed which is visible *via* the front side of the face plate. (The expression electron beam is understood to mean that the paths of the electrons in the beam are substantially parallel, or extend only at a small angle to one another, and that there is a main direction in which the electrons move.) The electron-beam controlled devices hitherto known require, *inter alia*, complicated electron-beam producing, focusing and/or amplifying means and complicated deflection means.

In the case of a thin CRT display device having a flat face plate and rear plate the atmospheric pressure exerts a great force on the face plate and on the rear plate. The larger the dimensions of the display screen, the thicker the face plate and the rear plate must be, if internally no measures are taken.

In view of the foregoing it is an object of the invention to provide a flat-panel picture display device which substantially does not have the drawbacks of the above-mentioned devices.

According to the invention, a colour picture display device having a vacuum envelope with a front wall and a luminescent screen and with a rear wall therefore comprises a plurality of juxtaposed sources for emitting electrons, electron ducts adjacent to the rear wall and cooperating with the sources and having walls of substantially electrically insulating material having a secondary emission coefficient suitable for electron transport for transporting, through vacuum, electrons in the form of electron currents, means for withdrawing each electron current at predetermined (particularly successive) locations from its duct and means for directing said current towards a desired location on the luminescent screen, said luminescent screen having a repetitive pattern of triplets of dot-shaped phosphor elements luminescing in different colours (for example, red, green and blue), a flu-spacer structure of electrically insulating material being arranged adjacent to the luminescent screen. A flu-spacer structure is herein understood to mean a spacer which is adjacent to the luminescent screen.

The inventive approach of providing a flat-panel picture display device is based on the discovery that electron transport is possible when electrons impinge on a wall of an elongate evacuated cavity (referred to as compartment) defined by walls of high-ohmic, electrically substantially insulating material (for example, glass) if an electric field of sufficient power is realised in the longitudinal direction of the compartment (by applying an electric potential difference across the ends of the compartment). The impinging electrons then generate secondary electrons by wall interaction which are attracted to a further wall section and in their turn generate secondary electrons by wall interaction. As will be further described, the circumstances (field strength, electrical resistance of the walls, secondary emission coefficient δ of the walls) may be chosen to be such that a constant vacuum current will flow in the compartment.

By withdrawing electrons at desired locations *(via* apertures) from the compartments and directing them towards a luminescent screen, for example, by means of an accelerating field, a picture can then be formed on the luminescent screen.

The maximal landing reserve is obtained by forming the colour pattern of dot-shaped phosphor elements on the luminescent screen as a delta configuration (triplets arranged in a triangular form). This landing reserve may be, for example, larger than in the case of a screen with colour lines. In EP-A-400 750, which is a prior art document according to article 54 (3), EPC, a flat screen colour display device is disclosed which has a such luminescent screen with triplets of red, green and blue phosphor lines. Moreover, in the case of matrix-oriented displays with a screen of colour lines, artefacts may occur in the picture (for example, a striped structure), which artefacts are now avoided.

A first embodiment is characterized in that the means for directing each electron current to a desired location on the luminescent screen comprise an apertured selection plate of electrically insulating material separated from the luminescent screen by the flu-spacer structure, each aperture of the selection plate being associated with one of the dot-shaped phosphor elements *via* an aperture in the (in particular plate-shaped or honeycomb-shaped) flu-spacer structure. If the following components are present, the desired vacuum support is obtained by the combination: side walls of the electron ducts-selection plate-flu-spacer structure.

The flu-spacer structure may be, for example, a system of mutually parallel walls extending at an angle (of approximately 60°) to the side walls of the electron ducts. This is possible because of the delta configuration of the phosphor elements and leads to a stabler construction than in the case where said side walls and the spacer walls would be parallel.

A preferred embodiment is, however, characterized in that the flu-spacer structure comprises a plate-shaped or honeycomb-shaped structure having apertures which associate each dot-shaped phosphor element with one aperture in the adjacent selection plate. In addition to a greater stability, the use of these structures has the extra advantage that electrons backscattered from the luminescent screen cannot land on other dot-shaped phosphor elements, which leads to a better contrast and a better colour purity.

A selection means is provided by providing the apertures in the selection plate row by row with electrodes which are energizable by means of a first (positive) electric voltage (pulse) so as to withdraw electron currents from the ducts *via* the apertures of a row, or they are energizable by means of a second (lower) electric voltage if no electrons should be locally withdrawn from the ducts. The electrons extracted by this selection means can be directed towards the screen by applying an acceleration voltage.

All electron currents generated by the electron sources should be guided in the electron ducts across at least a part of the height towards the upper edge or the lower edge of the luminescent screen. For this purpose one row of electron sources or a plurality of parallel rows of electron sources may be provided.

Each of these electron sources may be placed within the electron duct with which it cooperates, or they are alternatively located at the outer side, opposite an entrance portion, of the electron duct with which they cooperate.

By applying a sufficiently large positive voltage difference between an electron source and the entrance portion of an electron duct cooperating-therewith, the emitted electrons are accelerated towards the electron duct, whereafter they generate secondary electrons in the electron duct by means of wall interaction.

Electrons which are line-sequentially withdrawn from the electron ducts can be accelerated (as beams) towards the luminescent screen by a applying a sufficiently large voltage difference between the electron ducts and the screen, for example, a difference of 3 kV. One picture line at a time can thus be written. The video information (grey scales) can be presented, for example, in the form of pulse width modulation. The distance to the screen may be very small so that the spot remains small.

These and other aspects of the invention will be apparent from and elucidated with reference to the embodiments described hereinafter. Identical reference numerals are used for corresponding components.
Fig. 1 is a diagrammatic perspective elevational view, partly broken away, of a part of a construction of a picture display device according to the invention, with electron ducts, a selection plate and a flu-spacer structure, whose components are not drawn to scale;
Fig. 1A is a side elevation, broken away, of the construction of Fig. 1 to illustrate the general operation of the device according to the invention;
Fig. 1B is a front elevation of a part of the - apertured - selection plate used in the construction of Fig. 1,
Fig. 1C is an elevational view of a part of a selection plate provided with selection electrodes, viewed through the apertures in an adjacent flu-spacer structure,
Fig. 2 shows a similar selection plate as Fig. 1B for an alternative construction,
Fig. 3 shows a graph in which the secondary emission coefficient δ as a function of the primary electron energy Eₚ is plotted for a wall material which is characteristic of the invention,
Fig. 4 is a "vertical" cross-section through a part of a construction with selection plates for preselection and fine selection, which is an alternative to the construction of Fig. 1A,
Fig. 5 shows an alternative construction for the preselection,
Fig. 6 shows a detail of Fig. 5, and
Fig. 7 shows a honeycomb-shaped spacer structure for an alternative construction.

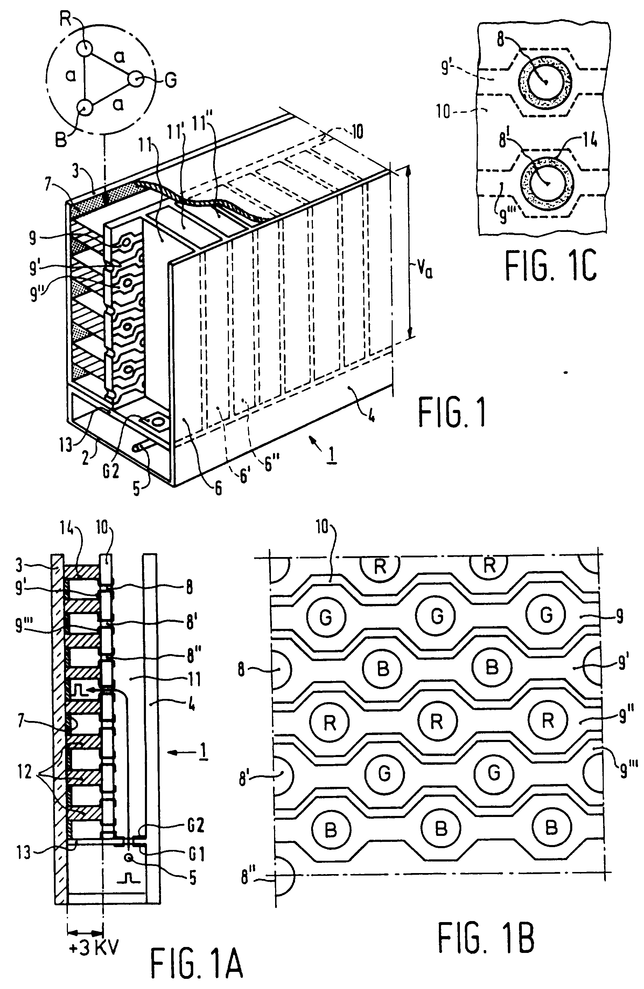

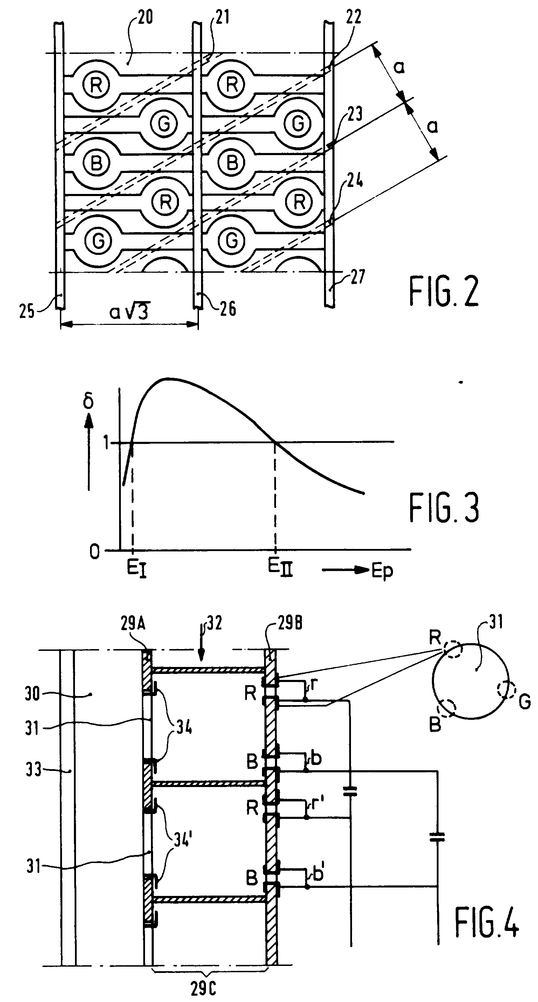

Figs. 1 and 1A show a flat-panel picture display device 1 according to the invention having a display panel (window) 3 and a rear wall 4 located opposite said panel. A luminescent screen 7 having a repetitive pattern of triplets of red (R), green (G) and blue (B) luminescing phosphor elements, as shown in the inset, is arranged on the inner surface of window 3. In the relevant case the dot-shaped phosphor elements of a triplet are located at the apexes of an equilateral triangle with side a. An electron source arrangement 5,for example, a line cathode which by means of electrodes provides a large number of electron emitters, for example 600, or a similar number of separate emitters, is present proximate to a wall 2 which connects panel 3 and the rear wall. Each of these emitters is to provide a relatively small current so that many types of cathodes (cold or thermal cathodes) are suitable as emitters. The emitters may be arranged jointly or separately. They may have a constant or controllable emission. The electron source arrangement 5 is arranged opposite entrance apertures of a row of electron ducts extending substantially parallel to the screen, which ducts are constituted by compartments 6, 6', 6'', ..... etc., in this case one compartment for each electron source. These compartments have cavities 11, 11', 11'', .... defined by walls. At least one wall (preferably the rear wall) of each compartment is made of a material which has a suitable high electrical resistance for the purpose of the invention (for example, ceramic material, glass, synthetic material - coated or uncoated) and which have a secondary emission coefficient δ > 1 over a given range of primary electron energies (see Fig. 3). The electrical resistance of the wall material has such a value that a minimum possible total amount of current (preferably less than, for example, 10 mA) will flow in the walls in the case of a field strength in the axial direction in the compartments of the order of one hundred to several hundred volts per cm required for the electron transport. By applying a voltage of the order of several dozen to several hundred volts (value of the voltage is dependent on circumstances) between the row 5 of electron sources and the compartments 6, 6', 6'', electrons are accelerated from the electron sources towards the compartments, whereafter they impinge upon the walls in the compartments and generate secondary electrons.

The invention is based on the recognition that vacuum electron transport within compartments having walls of electrically insulating material is possible if an electric field (E_{y}) of sufficient power is applied in the longitudinal direction of the compartment. Such a field realises a given energy distribution and spatial distribution of electrons injected into the compartment so that the effective secondary emission coefficient δ_{eff} of the walls of the compartment will on average be equal to 1 in operation. Under these circumstances one electron will leave for each electron which enters (on average), in other words, the electron current is constant throughout the compartment and is approximately equal to the current which enters. If the wall material is high-ohmic enough (which is the case for all appropriate untreated glass types as well as for kapton, pertinax and ceramic materials), the walls of the compartment cannot produce or take up any nett current so that this current, even in a close approximation, is equal to the entering current. If the electric field is made larger than the minimum value which is required to obtain emission coefficient δ_{eff} = 1, the following will happen. As soon as δ_{eff} is slightly larger than 1, the wall is charged inhomogeneously positively (due to the very small conductance this charge cannot be depleted). As a result, the electrons will reach the wall earlier on average than in the absence of this positive charge, in other words, the average energy taken up from the electric field in the longitudinal direction will be smaller so that a state with δ_{eff} = 1 adjusts itself. This is a favourable aspect because the exact value of the field is not important, provided that it is larger than the previously mentioned minimum value.

Another advantage is that in the state δ_{eff} = 1 the electron current in the compartment is constant and can be made to be very satisfactorily equal *via* measuring and feedback or *via* current control for each compartment 50 that a uniform picture can be realised on the luminescent screen.

The compartment walls facing the luminescent screen 7, which is arranged on the inner wall of the panel 3, are constituted by a selection plate 10 (see Fig. 1A) in the embodiment of Fig. 1. The selection plate 10 has extraction apertures 8, 8', 8'', .... etc. Individually driven emitters are preferably used in combination with a pattern of parallel, apertured strip-shaped selection electrodes 9, 9', 9'', .... to be energized by a selection voltage. These electrodes are present on one of the main surfaces of the plate 10, or on both main surfaces. In both cases the walls of the apertures 8, 8', 8'', .... may be metallized. A flu-spacer structure 12, in this case a plate having apertures 14, ... which form a connection between the apertures 8, 8', 8'', ..... and the phosphor elements R, G, B ..... keeps the plate 10 spaced apart from face plate 3 and ensures a lateral localization of extracted electron beams in that the apertures 14, ... closely surround the electron beam paths. If selection electrodes are arranged on the surface of the plate 10 facing the screen 7, it is advantageous if they entirely cover at least those surface areas which are located between the walls of the apertures 14 of the structure 12 (see, for example Fig. 1C). The selection electrodes 9, 9', 9'', .... are formed for each picture line, for example, in the manner shown in Fig. 1B (pierced electrodes widening at the areas of the apertures 8, 8', 8'', ....). The material of the electrodes may cover the walls of the apertures 8, 8', 8'', ... . Desired locations on the screen 7 can be addressed by means of (matrix) drive of the individual cathodes and the selection electrodes 9, 9', 9'', .... Voltages which increase substantially linearly (as viewed from the cathode side) are applied to the selection electrodes 9, 9', 9'', ....., for example, by means of voltage-dividing resistors. When a picture line must be activated, *i.e.* when electrons must be withdrawn *via* apertures in an aperture row from the electron currents flowing behind them in parallel columns, a pulsatory voltage ΔU can be added to the local voltage. In view of the fact that the electrons in the compartments have a relatively low velocity due to the collisions with the walls, ΔU may be comparatively low (of the order of, for example, 100 V to 200 V). A voltage difference Vₐ is applied across the total compartment height so as to supply the transport field.

The materials to be used for the walls of the electron ducts must have a high electrical resistance and a secondary emission coefficient δ > 1, see Fig. 3, at least over a certain range E_{I}-E_{II} of primary electron energies Eₚ. E_{I} is preferably as low as possible, for example, one to several times 10 eV. *Inter alia*, specific types of glass (E_{I} is approximately 30 eV), ceramic material, pertinax and kapton meet this requirement. Materials which do not meet this requirement may be provided, for example, with a suitable coating (of, for example, MgO).

The electrical resistance depends on whether not only electron guidance but also amplification (over a part or over the total length) of the electron ducts is desired and how much total current may flow in the walls in connection with the power to be dissipated.

The mode using electron guidance only is preferred. The electrical resistance may then be in the range between 10⁶ and 10¹⁵ Ω. As an alternative the cathode-sided portion of the electron ducts may have a relatively low resistance, for example, in the range between 10 kΩ and 100 kΩ so as to ensure amplification. At the above-mentioned values the required power can remain below 100 W.

In a given case electron transport was realised in a compartment of lead glass with a length of 17 cm and a bore of 1 mm diameter (electrical resistance measured over the length > 10¹⁵ Ω) by applying an electric voltage of 3.5 kV across the ends.

It is further to be noted that the walls of the ducts may consist of an electrically insulating material which has a constructive function as well as a secondary emission function. Alternatively, they may consist of an electrically insulating material having a constructive function (for example, a synthetic material), on which material a layer having a secondary emission function is provided (for example, quartz or glass or ceramic material such as MgO).

The electric voltage across the electron ducts required for electron guidance increases with the length of the ducts. However, this voltage can be reduced by arranging the (line) arrangement of electron sources in, for example, the centre instead of near one end of the display device (as in Fig. 1). A voltage difference of, for example, 3 kV can then be applied between the centres of the ducts and their one ends so as to draw the electron current in one direction and subsequently the same voltage difference can be applied between the centres and their other ends so as to draw the electron current in the opposite direction, instead of applying a voltage difference of 6 kV throughout the height when the electron sources are arranged near one end of the display device. The use of a plurality of parallel rows of electron sources is even more advantageous in this respect.

Electrons which are drawn from an aperture in an electron duct by a selection electrode are further directed towards the luminescent screen 7 where one picture line at a time can thus be written. The video information may be applied, for example, in the form of pulse width modulation. For example, a cathode cooperating with an electron duct can be energized for a shorter or longer time. For producing a white pixel, the cathode may be energized, for example, during the entire line period in this case. An alternative is for the cathode to be constantly energized during the entire line period and to control the emission level.

Fig. 2 is an elevational view of a part of a selection plate 20 having apertures and selection strips. The phosphor elements R, G, B etc. of the luminescent screen are visible through the apertures. These elements are arranged in the manner as shown in the inset of Fig. 1. In this case the selection plate 20 does not cooperate with a plate-shaped spacer structure (having a hexagonal pattern of apertures), but with a spacer structure having mutually parallel walls 21, 22, 23, 24, .... arranged at a pitch a and extending at an angle of approximately 60° to electron duct side walls 25, 26, 27, ..... arranged at a pitch of a√3.

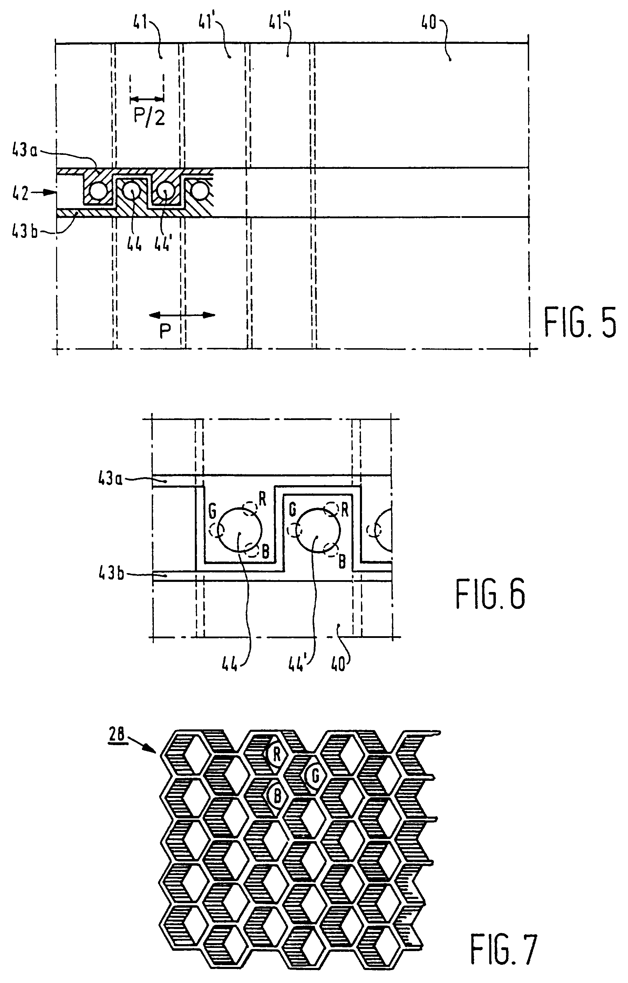

As already noted in the opening paragraph, the use of an apertured, plate-shaped structure or a honeycomb spacer structure has advantages over the use of a spacer structure having walls arranged at an angle of 60°, as far as contrast and colour purity are concerned. A part of a honeycomb structure 28 is shown in Fig. 7.

Fig. 4 shows in a diagrammatical cross-section an embodiment of a part of a display device according to the invention having a selection plate structure 32 which comprises a preselection plate 29A with apertures 31, 31', .... and a fine-selection plate 29B with apertures R, G, B. In this case three fine-selection apertures R, G, B are associated with each preselection aperture 31, 31', etc. (see inset). Other numbers are also possible. An intermediate spacer structure 29C is arranged between the preselection plate 29A and the fine-selection plate 29B.

Electron transport ducts 30 are formed between the structure 32 and a rear wall. To be able to draw electrons from the transport ducts 30 *via* the apertures 31, 31', ...., pierced metal preselection electrodes 34, 34', etc. are arranged on the plate 29A. The walls of the apertures 31, 31',... are plated through, but there is little or no metal on the surface of plate 29A at the side where the electrons arrive. This is to ensure that no electrons remain on a selection electrode during addressing (*i.e*. the electrode should not draw current). Another solution to the problem of drawing current is to ensure that if there is electrode metal on the selection plate surface on which the electrons land, this metal has such a large secondary emission coefficient that the preselection electrodes do not draw any nett current.

Similarly as the plate 10 of the Fig. 1 construction, the fine-selection plate 29B has (fine-) selection electrodes so as to realise colour selection. In this respect it is important that it should be possible to give the colour selection electrodes an electric through-connection for each colour (for example, *via* coupling capacitors). In fact, a preselection has already taken place and electrons can no longer reach the wrong location. This means that only one group, or a small number of groups, of three separately energizable colour selection electrodes is required for this form of colour selection. Although other modes are alternatively possible, the drive is effected, for example, as follows. Both the coarse-selection and the fine-selection electrodes are given a substantially linearly increasing potential (for example, by means of suitable voltage-dividing resistors), the fine-selection electrodes being at a slightly lower potential than the coarse-selection electrodes. One (or more) picture lines are selected by applying a positive voltage pulse of, for example 200 V to the desired coarse-selection electrode. The colour pixels are subsequently addressed by applying shorter pulses with an amplitude of, for example, 300 V to the fine-selection electrodes.

The fine-selection plate 29B may be separated from the luminescent screen by one of the afore-mentioned flu-spacer structures (12'' in Fig. 1; "21", "22", "23", "24" in Fig. 2; "28" in Fig. 7). The material of the flu-spacer preferably has either a low secondary emission, or a coating having this property should be provided on it. In addition, another condition for a satisfactory operation is important: each (fine-) selection electrode should be dimensioned in such a way that there is no isolator material of the selection plate to be seen when one looks through the spacer apertures, *cf.* Fig. 1C.

Fig. 5 shows diagrammatically a part of a selection plate 40 constituting the front wall of transport ducts 41, 41', 41'', ..... with a pitch P. The horizontal picture resolution is determined by the pitch of the transport ducts. A better resolution can thus be obtained by reducing this pitch. However, this has the drawback that the voltage difference across the length of the ducts required for transporting the electron currents will increase, which is not always desirable. This problem can be solved by means of an adapted pattern of selection apertures and electrodes, in which the pitch of the transport ducts is unmodified, as will be illustrated with reference to Fig. 5.

Fig. 5 shows the case where two preselection apertures are provided for each preselection location in each row, with a pitch (p/2). Each selection electrode 42 is divided in the manner shown into two apertured sub-electrodes 43a and 43b, which simplifies contacting. In this way the horizontal resolution can be doubled with respect to the construction shown in Fig. 4, while the transport ducts 11, 11', 11'', ...... cooperating with one electron emitter each can be operated in the same way and with the same voltages. Three fine-selection apertures in a fine-selection plate for selecting the colours red (R), green (G) and blue (B) are associated with each preselection aperture 44, 44', ...., for example, as shown in Fig. 6. The system described herein can be operated in the multiplex mode. This means that, for example, two parallel electron currents and six luminescent elements can be driven (multiplexed) in one line period by means of one electron emitter. Other multiplex modes are alternatively possible.

## Claims

1. A colour picture display device having a vacuum envelope with a front wall and a luminescent screen and with a rear wall, comprising a plurality of juxtaposed sources for emitting electrons, electron ducts adjacent to the rear wall and cooperating with the sources and having walls of substantially electrically insulating material having a secondary emission coefficient suitable for electron transport for transporting, through vacuum, electrons in the form of electron currents, means for withdrawing each electron current at predetermined locations from its duct and means for directing said current towards a desired location on the luminescent screen, said luminescent screen having a repetitive pattern of triplets of dot-shaped phosphor elements Luminescing in different colours, a flu-spacer structure of electrically insulating material being arranged adjacent to the luminescent screen.

2. A device as claimed in Claim 1, characterized in that the means for directing each electron current to a desired location on the luminescent screen comprise an apertured selection plate of electrically insulating material separated from the luminescent screen by the flu-spacer structure, each aperture of the selection plate being associated with one of the dot-shaped phosphor elements *via* an aperture in the flu-spacer structure.

3. A device as claimed in Claim 2, characterized in that the flu-spacer structure comprises a plate-shaped or honeycomb-shaped structure having apertures which associate each dot-shaped phosphor element with one aperture in the selection plate.

4. A device as claimed in Claim 2, characterized in that the selection plate cooperates with an apertured preselection plate, the apertures in the preselection plate communicating with the transport ducts, an intermediate spacer structure being arranged between the preselection plate and the selection plate and each aperture in the preselection plate being associated with at least two apertures in the selection plate.

5. A device as claimed in Claim 4, characterized in that each aperture in the preselection plate is associated with three apertures in the selection plate and in that of said three apertures one is associated with a red-luminescing phosphor element, one is associated with a blue-luminescing phosphor element and one is associated with a green-luminescing phosphor element of one triplet.

6. A device as claimed in Claim 2 or 4, characterized in that the apertures in the (pre)selection plate are provided row by row with strip-shaped (pre)selection electrodes which are pierced at the locations of the apertures.

7. A device as claimed in Claim 6, characterized in that the (pre)selection electrodes are connected together *via* voltage-dividing resistors.

8. A device as claimed in Claim 6, characterized in that the selection electrodes are electrically through-connected per colour.

9. A device as claimed in Claim 4, characterized in that each transport duct communicates with two parallel rows of apertures in the preselection plate.

10. A device as claimed in Claim 9, characterized in that the electron ducts have a pitch which is twice as large as that of the triplets of luminescing phosphor elements.

11. A device as claimed in Claim 6, characterized in that the strip-shaped (pre)selection electrodes are arranged on the screen-sided surface of the (pre)selection plate.

12. A device as claimed in Claim 11, characterized in that, viewed through the apertures of the flu-spacer structure, around the apertures in the selection plate only material of the selection electrodes is visible.

## Patentansprüche

1. Bildwiedergabeanordnung mit einer Vakuumhülle mit einer Vorderwand und einem Leuchtschirm und mit einer Rückwand, mit einer Anzahl nebeneinander vorgesehener Quellen zum Emittieren von Elektronen, mit Elektronenleitungen in der Nähe der Rückwand und mit den Quellen zusammenarbeitend und mit Wänden aus elektrisch nahezu isolierendem Material mit einem zweiten Emissionskoeffizienten, der für Elektronentransport geeignet ist zum Transportieren, durch das Vakuum hindurch, von Elektronen in Form von Elektronenströmen, mit Mitteln zum Herausziehen jedes Elektronenstromes an vorbestimmten Stellen aus der Leitung und mit Mitteln zum Zuführen des genannten Stromes zu einer gewünschten Stelle am Leuchtschirm, wobei dieser Leuchtschirm ein sich wiederholendes Muster von Triplets punktförmiger Phosphorelemente aufweist, die in verschiedenen Farbtönen aufleuchten, wobei in der Nähe des Leuchtschirms eine Distanzstruktur aus elektrisch isolierendem Material vorgesehen ist.

2. Anordnung nach Anspruch 1, dadurch gekennzeichnet, daß die Mittel zum Zuführen jedes Elektronenstromes zu einer gewünschten Stelle am Leuchtschirm eine mit Öffnungen versehene Selektionsplatte aus elektrisch isolierendem Material aufweisen, die durch eine Distanzstruktur von dem Leuchtschirm getrennt ist, wobei jede Öffnung der Selektionsplatte mit einem der punktförmigen Phosphorelemente zusammenarbeitet, und zwar über eine Öffnung in der Distanzstruktur.

3. Anordnung nach Anspruch 2, dadurch gekennzeichnet, daß die Distanzstruktur eine platten- oder wabenförmige Struktur hat mit Öffnungen, die mit je einem punktförmigen Phosphorelement zusammenarbeiten.

4. Anordnung nach Anspruch 2, dadurch gekennzeichnet, daß die Selektionsplatte mit einer mit Öffnungen versehenen Vorselektionsplatte zusammenarbeitet, wobei die Öffnungen in der Vorselektionsplatte mit den Transportleitungen zusammenarbeiten, wobei zwischen der Vorselektionsplatte und der Selektionsplatte eine Zwischendistanzstruktur vorgesehen ist, wobei jede Öffnung in der Vorselektionsplatte wenigstens zwei Öffnungen in der Selektionsplatte zugeordnet ist.

5. Anordnung nach Anspruch 4, dadurch gekennzeichnet, daß jede Öffnung in der Vorselektionsplatte drei Öffnungen in der Selektionsplatte zugeordnet ist und daß von den genannten drei Öffnungen eine Öffnung einem rotleuchtenden Phosphorelement zugeordnet ist, eine Öffnung dem blauleuchtenden Phosphorelement zugeordnet ist und eine Öffnung einem grünleuchtenden Phosphorelement zugeordnet ist.

6. Anordnung nach Anspruch 2 oder 4, dadurch gekennzeichnet, daß die Öffnungen in der (Vor)Selektionsplatte reihenweise mit streifenförmigen (Vor)selektionselektroden vorgesehen sind, die an den Stellen der Öffnungen mit Öffnungen versehen sind.

7. Anordnung nach Anspruch 6, dadurch gekennzeichnet, daß die (Vor)Selektionselektroden über Spannungsteilerwiderstände miteinander verbunden sind.

8. Anordnung nach Anspruch 6, dadurch gekennzeichnet, daß die Selektionselektroden je Farbton elektrisch miteinander verbunden sind.

9. Anordnung nach Anspruch 4, dadurch gekennzeichnet, daß jede Transportleitung mit zwei parallelen Reihen von Öffnungen in der Vorselektionsplatte zusammenarbeitet.

10. Anordnung nach Anspruch 9, dadurch gekennzeichnet, daß die Elektronenleitungen einen Mittenabstand aufweisen, der zweimal größer ist als der der Triplets der leuchtenden Phosphorelemente.

11. Anordnung nach Anspruch 6, dadurch gekennzeichnet, daß die streifenförmigen (Vor)Selektionselektroden auf der schirmseitigen Oberfläche der (Vor)Selektionsplatte vorgesehen sind.

12. Anordnung nach Anspruch 11, dadurch gekennzeichnet, daß durch die Öffnungen der Distanzstruktur gesehen, um die Öffnungen in der Selektionsplatte nur Material der Selektionselektroden sichtbar ist.

## Revendications

1. Dispositif d'affichage d'image en couleurs comprenant une enveloppe sous vide avec une paroi avant et un écran luminescent et avec une paroi arrière, comprenant une pluralité de sources juxtaposées pour émettre des électrons, des conduits à électrons adjacents à la paroi arrière qui coopèrent avec les sources et possèdent des parois en matière sensiblement isolante électrique ayant un coefficient d'émission secondaire convenant pour le transport des électrons en vue de transporter, à travers le vide, des électrons sous la forme de courants d'électrons, des moyens pour prélever chaque courant d'électrons à des endroits déterminés au préalable de son conduit et des moyens pour diriger ce courant vers un endroit souhaité sur l'écran luminescent, l'écran luminescent comprenant un motif répétitif de triplets de luminophores en forme de pastilles qui sont luminescents dans différentes couleurs, une structure séparatrice de l'écran faite d'une matière isolante électrique étant agencée à proximité de l'écran luminescent.

2. Dispositif suivant la revendication 1, caractérisé en ce que les moyens pour diriger chaque courant d'électrons vers un endroit souhaité de l'écran luminescent comprennent une plaque de sélection perforée en une matière isolante électrique séparée de l'écran luminescent par la structure séparatrice de l'écran, chaque perforation de la plaque de sélection étant associée à l'un des luminophores en forme de pastille par un orifice dans la structure séparatrice de l'écran.

3. Dispositif suivant la revendication 2, caractérisé en ce que la structure séparatrice de l'écran comprend une structure en forme de plaque ou en forme de nid d'abeilles comportant des orifices qui associent chaque luminophore en forme de pastille à une perforation dans la plaque de sélection adjacente.

4. Dispositif suivant la revendication 2, caractérisé en ce que la plaque de sélection coopère avec une plaque de présélection perforée, les perforations dans la plaque de présélection communiquant avec les conduits de transport, une structure de séparation intermédiaire de l'écran étant logée entre la plaque de présélection et la plaque de sélection et chaque perforation dans la plaque de présélection étant associée à au moins deux perforations dans la plaque de sélection.

5. Dispositif suivant la revendication 4, caractérisé en ce que chaque perforation dans la plaque de présélection est associée à trois perforations dans la plaque de sélection et en ce que des trois perforations, une est associée à un luminophore émettant dans le rouge, une est associée à un luminophore émettant dans le bleu et une est associée à un luminophore émettant dans le vert d'un triplet.

6. Dispositif suivant la revendication 2 ou 4, caractérisé en ce que les perforations dans la plaque de présélection sont pourvues, rangée par rangée, d'électrodes de présélection en forme de bandes qui sont percées aux endroits des perforations.

7. Dispositif suivant la revendication 6, caractérisé en ce que les électrodes de présélection sont connectées entre elles par des résistances montées de division de tension.

8. Dispositif suivant la revendication 6, caractérisé en ce que les électrodes de sélection sont connectées directement, électriquement, par couleur.

9. Dispositif suivant la revendication 4, caractérisé en ce que chaque conduit de transport communique avec deux rangées parallèles de perforations dans la plaque de présélection.

10. Dispositif suivant la revendication 9, caractérisé en ce que les conduits à électrons ont un pas qui est le double de celui des triplets des luminophores.

11. Dispositif suivant la revendication 6, caractérisé en ce que les électrodes de présélection en forme de bandes sont disposées sur la surface côté écran de la plaque de présélection.

12. Procédé suivant la revendication 11, caractérisé en ce que, vu à travers les ouvertures de la structure séparatrice de l'écran autour des perforations de la plaque de sélection, seule la matière des électrodes de sélection est visible.
